# EUROPEAN PATENT SPECIFICATION

(11) **EP 4 328 049 B1**
(45) Date of publication and mention of the grant of the patent: **14.05.2025**
(21) Application number: 23179668.1
(22) Date of filing: 16.06.2023
(51) Int. Cl.: B60C 11/12, B29D 30/06

(54) **PNEUMATIC TIRE AND MOLD FOR MOLDING TIRE**
LUFTREIFEN UND FORM ZUM FORMEN VON REIFEN
PNEUMATIQUE ET MOULE POUR LE MOULAGE DE PNEUMATIQUE

(30) Priority: 25.08.2022 JP 2022133995
(43) Date of publication of application: 28.02.2024
(73) Proprietor: TOYO TIRE CORPORATION, Itami-shi, Hyogo 6640847 (JP)
(72) Inventor: KAMADA, Nobuyuki, Itami-shi, 6640847 (JP)
(74) Representative: Balder IP Law, S.L.

(56) References cited:
- WO-A1-99/48707
- JP-A- 2014 046 743
- JP-A- H0 558 118
- US-A1- 2011 277 896

## Description

### TECHNICAL FIELD

The present invention relates to a pneumatic tire including a tread including a block in which sipes are formed, and a mold for molding a tire for molding the pneumatic tire.

### BACKGROUND

A pneumatic tire includes a tread as a portion to be in contact with a road surface. The tread includes a plurality of blocks. Sipes are formed in each block. The sipe is a narrow groove and has functions of adjusting hardness of the block, increasing a gripping force by increasing the number of edges of the block, and the like. The sipe in the pneumatic tire is molded using sipe blades provided in a mold for molding a tire.

For example, JP 2021-112944 A discloses a tire in which a plurality of minute protrusions are formed on a wall surface of a sipe, a water repellent effect of the wall surface of the sipe is improved, and water inside the sipe is discharged.

In addition, JP H08-175115 A discloses a pneumatic tire in which irregularities are formed on an inner wall surface of a sipe, a friction coefficient between inner wall surfaces is improved, and a block is prevented from being greatly deformed.

Further, JP 2005-329793 A discloses a pneumatic tire in which a recessed portion (space portion) is formed on an inner wall surface of a sipe, and a water removal property is secured. Also, WO 99/48707 A1 discloses a tire tread which comprises elastomeric material and has a plurality of grooves therein, defining ground engaging elastomeric elements, wherein the elastomeric elements include a sipe which has a first surface area and an opposite facing second surface area, each surface area having a plurality of recesses or protrusions, each recess having a centroid aligned with a centroid of a protrusion, and the combination of recesses and protrusions interlock increasing the rigidity of the elastomeric elements. Also, US 2011/277896 A1 discloses a tire wherein a plurality of sipes are provided in a tread surface of a block and, in the sipes, there are formed protrusions on a first sipe wall surface and recesses on a second sipe wall surface, the recesses engaging with the protrusions. In addition, US 2011/277896 A1 discloses that collapse of portions of the block sandwiched by the sipes is suppressed due to engagement of the protrusions and the recesses. Also, JP H05 58118 A discloses a pneumatic tire, and in a tread of the tire there are provided blocks each of which is formed from a plurality of main and auxiliary grooves, wherein at least one notch is furnished, and a projection is formed on one of the mating surfaces of the notch in its inner side, while a dimple to mesh with the projection is formed at the other surface. Also, JP 2014 046743 A discloses a tire wherein in a tread part a plurality of circumferential grooves and a plurality of lateral grooves are provided so as to demarcate a plurality of blocks, and in each block, a plurality of sipes are provided, wherein in each sipe, a protrusion is formed on one of a pair of wall surfaces, and a recess engaging with the protrusion is formed on the other of the pair of wall surfaces.

However, in the tire disclosed in JP 2021-112944 A, although the plurality of minute protrusions are formed on the wall surface of the sipe and the water repellent effect of the sipe is improved, the minute protrusions may inhibit drainage from the sipe, and maneuver stability performance on a wet road surface may decrease. Here, the maneuver stability performance on the wet road surface is performance such that a pneumatic tire can travel while gripping a road surface in an environment where the road surface is wet in rainy weather or the like.

In addition, in the pneumatic tire disclosed in JP H08-175115 A, although the friction coefficient is improved, an improvement in maneuver stability performance on a wet road surface is not considered.

Further, in the pneumatic tire disclosed in JP 2005-329793 A, although the space portion is formed on the inner wall surface of the sipe and the water removal property is secured, since the space portion is large, block rigidity may decrease, and maneuver stability performance on a dry road surface may decrease. Here, the maneuver stability performance on the dry road surface is performance such that a pneumatic tire can travel while gripping a road surface in an environment of a dry road surface.

### SUMMARY

Therefore, an object of the present invention is to provide a pneumatic tire and a mold for molding a tire that are capable of improving maneuver stability performance on wet road surface and maneuver stability performance on dry road surface.

The pneumatic tire according to the present invention is a pneumatic tire including a tread including a block in which at least one sipe is formed. A plurality of recesses are formed in one wall surface of each of the at least one sipe. The recesses change in volume toward at least one of a tire radial direction and a tire axial direction in the block.

According to the pneumatic tire and the mold for molding a tire of the present invention, the maneuver stability performance on the wet road surface and the maneuver stability performance on the dry road surface can be improved.

### BRIEF DESCRIPTION OF DRAWINGS

FIG. 1 is a plan view showing a block pattern of a pneumatic tire according to an example of an embodiment;
FIG. 2 is an enlarged view of a portion A in FIG. 1;
FIG. 3 is a view showing a recess according to a first embodiment seen from an arrow B in FIG. 2;
FIG. 4 is a schematic view showing a mold for molding a tire according to the first embodiment;
FIG. 5 is a side view showing a sipe blade;
FIG. 6 is a view showing recesses according to a second embodiment;
FIG. 7 is a view showing recesses according to a third embodiment;
FIG. 8 is a view showing recesses according to a fourth embodiment;
FIG. 9 is a view showing recesses according to a fifth embodiment;
FIG. 10 is a view showing recesses according to a sixth embodiment;
FIG. 11 is a view showing recesses according to a seventh embodiment;
FIG. 12 is a view showing recesses according to an eighth embodiment;
FIG. 13 is a view showing recesses according to a ninth embodiment;
FIG. 14 is a view showing recesses according to a tenth embodiment;
FIG. 15 is a view showing recesses according to an eleventh embodiment; and
FIG. 16 is a view showing recesses according to a twelfth embodiment.

### DESCRIPTION OF EMBODIMENTS

Hereinafter, an example of an embodiment according to the present invention will be described in detail. In the following description, specific shapes, materials, directions, numerical values, and the like are examples for ease of understanding of the present invention, and can be appropriately changed according to applications, purposes, specifications, and the like.

### <Pneumatic Tire>

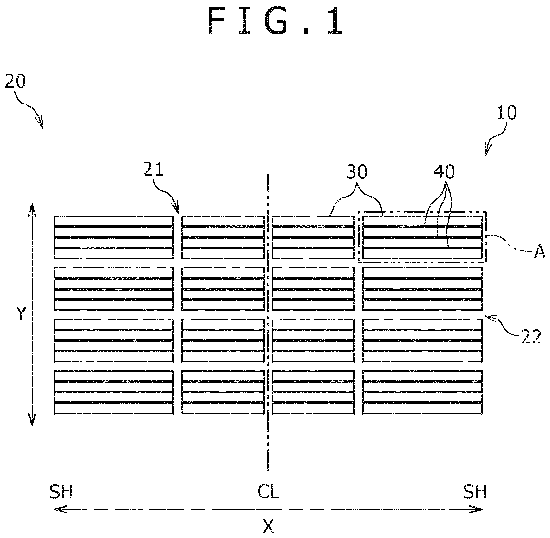

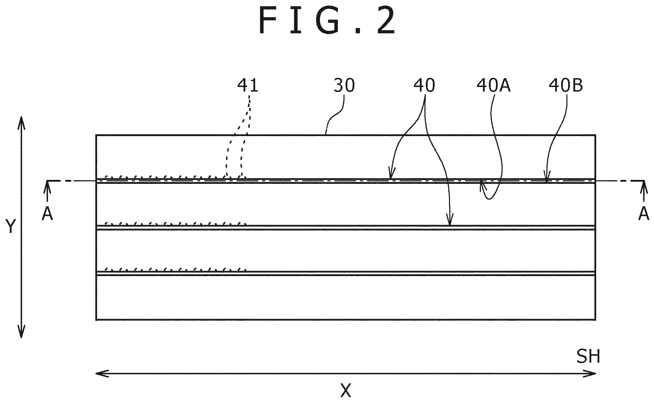

A pneumatic tire 10 according to an example of an embodiment will be described with reference to FIGS. 1 and 2.

As shown in FIG. 1, the pneumatic tire 10 includes a tread 20 including blocks 30, in each of which sipes 40 are formed. According to the pneumatic tire 10, maneuver stability performance on a wet road surface and maneuver stability performance on a dry road surface can be improved, as will be described in detail later.

Hereinafter, each member will be described with respect to a tire axial direction X, a tire circumferential direction Y, and a tire radial direction Z. In the tire axial direction X, a tire width may be described using an equator side and a shoulder side. Further, in the tire axial direction X, the block 30 may be described using a block central portion and two block end sides. Further, in the tire radial direction Z, a description may be given using a block surface side and a bottom side. In the drawings, an equator CL, a shoulder side SH, and a block surface SF are shown in respective directions.

The tread 20 is a portion in the pneumatic tire 10 to be in contact with a road surface. The tread 20 includes a plurality of blocks 30 divided by main grooves 21 and sub grooves 22. The blocks 30 are each formed in the same rectangular shape in a plan view, and are aligned in the tread 20. However, a shape of the blocks 30 according to the present embodiment is not limited thereto, the blocks 30 may have a rhomboid shape or a parallelogram shape as long as the blocks 30 are divided by the main grooves 21 and the sub grooves 22, and the shape is not particularly limited.

Each main groove 21 is a groove formed linearly to extend along the tire circumferential direction Y. Each sub groove 22 is a groove formed linearly to extend along the tire axial direction X. However, a shape of the main groove 21 or a shape of the sub groove 22 according to the present embodiment is not limited thereto, the main groove 21 may be inclined with respect to the tire circumferential direction Y, and the sub groove 22 may be inclined with respect to the tire axial direction X.

### <Sipe>

As shown in FIGS. 1 and 2, three sipes 40 are formed in the block 30. The sipe 40 is a groove having a width narrower than at least that of the main groove 21 and the sub groove 22, and is formed such that a depth of the groove is in the tire radial direction Z. However, the number of sipes 40 is not limited to that according to the present embodiment, and three to five sipes 40 may be formed in the block 30.

The sipe 40 is formed linearly along the tire axial direction X. However, a shape of the sipe 40 according to the present embodiment is not limited thereto, and for example, the sipe 40 may be inclined with respect to the tire axial direction X, may be formed in a waveform shape, or may be formed in a zigzag shape.

According to the sipes 40, hardness of the block 30 in the tread 20 can be adjusted by changing the shape or the number of the sipes 40. The number of edges of the block 30 is increased by the sipes 40, and a gripping force of the pneumatic tire 10 can be improved. Further, a water film on a wet road surface or on an icy and snowy road surface can be absorbed by the sipes 40, the blocks 30 can be brought into close contact with the road surface or ice, and the gripping force of the pneumatic tire 10 can be improved.

### <Recess>

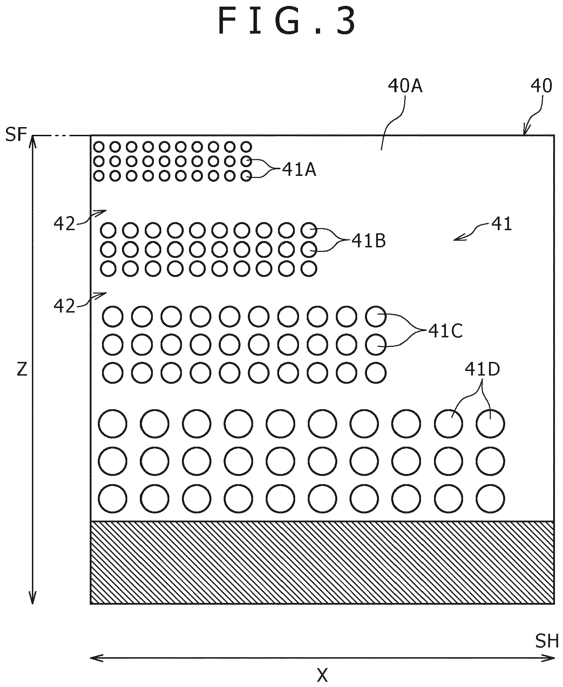

Recesses 41 according to a first embodiment will be described with reference to FIG. 3.

A plurality of recesses 41 are formed in one wall surface 40A of the sipe 40.

According to the recesses 41, water on the block surface SF of the tread 20 can be absorbed, and a water absorption effect of the sipe 40 can be improved. A portion in the wall surface 40A of the sipe 40 other than portions in which the recesses 41 are formed is formed as a flat surface. Here, the flat surface is a surface having a maximum height (Rz) of 4.5 µm to 12.5 µm and an arithmetic average roughness (Ra) of 1.12 µm to 3.15 µm, which are defined in JISB0601:2013 (ISO4287:187, Amd.1:2009).

Here, both wall surfaces 40A and 40B of the sipe 40 are surfaces of the sipe 40 facing each other in the tire circumferential direction Y. However, a configuration in which the recesses 41 are formed in the one wall surface 40A of the sipe 40 is not limited to the recess 41 according to the present embodiment, and the recesses 41 may be formed in the other wall surface 40B of the sipe 40. According to the invention, a surface facing the recesses 41 is a flat surface, and the recesses 41 are only formed in the one wall surface 40A of the sipe 40.

The recess 41 according to the present invention is formed in a hemispherical shape or the recess 41 has a semi-ellipsoid shape. It is preferable that the recess 41 according to the present embodiment is formed in a portion from the block surface side to 50 or more when a length (sipe depth) of the sipe 40 in the tire radial direction Z is set to 100. It is preferable that the recess 41 according to the present embodiment is formed at a length of 50 or more when a length of the sipe 40 in the tire axial direction X is set to 100.

The recesses 41 according to the present invention include recesses 41A, 41B, 41C, and 41D having different volumes of recessed portions (hereinafter referred to as a recess volume). The recesses 41 are formed by respectively gathering and aligning recesses having the same volume. In the block 30, regions in which the recesses 41 are formed are arranged from the block surface side to the bottom side in the tire radial direction Z in an order of a region in which the recesses 41A are formed, a region in which the recesses 41B are formed, a region in which the recesses 41C are formed, and a region in which the recesses 41D are formed. The recesses 41A, 41B, 41C, and 41D are formed to align on one side (the equator side in the example in FIG. 3) in the tire axial direction X.

The recesses 41A, 41B, 41C, and 41D increase in recess volume in an order of the recesses 41A, 41B, 41C, and 41D. In other words, the recess volumes of the recesses 41 increase from the block surface side to the bottom side in the tire radial direction Z. The numbers of the recesses 41A, 41B, 41C, and 41D according to the present embodiment are the same.

Gaps 42 are formed between the regions in which the recesses 41A, 41B, 41C, and 41D are formed. A size of each gap 42 is larger than at least an interval between the recesses 41A, 41B, 41C, and 41D in the regions in which the recesses 41A, 41B, 41C, and 41D are formed, respectively.

### <Effect>

With the above configuration, the maneuver stability performance on the wet road surface and the maneuver stability performance on the dry road surface can be improved. More specifically, since, among the plurality of recesses 41, the recess volume of the recess 41 on the bottom side is larger than the recess volume of the recess 41 on the block surface side in the tire radial direction Z, in-plane rigidity can be reduced, a ground contact area can be increased, and the maneuver stability performance on the wet road surface can be improved.

In addition, since, among the plurality of recesses 41, the recess volume of the recess 41 on the block surface side is smaller than the recess volume of the recess 41 on the bottom side in the tire radial direction Z, surface rigidity can be increased, and a decrease in maneuver stability performance on a dry road surface can be prevented.

### <Mold for Molding Tire>

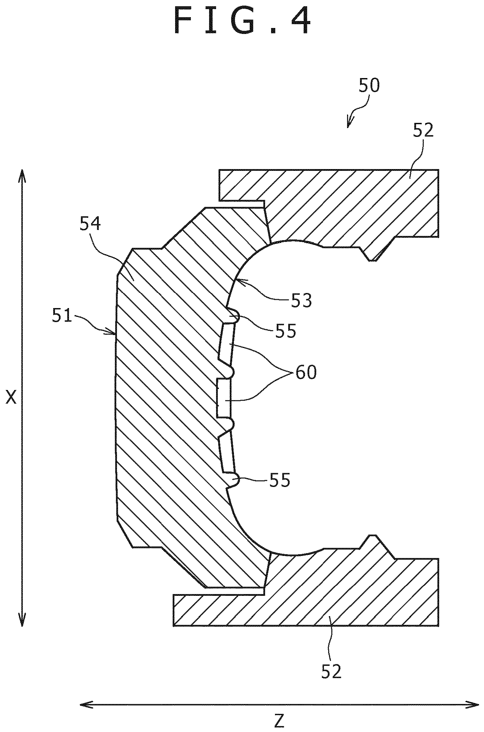

A mold 50 as an example of an embodiment will be described with reference to FIG. 4.

As a mold for molding a tire, the mold 50 is a mold for molding the pneumatic tire 10 described above. The pneumatic tire 10 includes the tread 20 including the blocks 30 in which the sipes 40 are formed as described above, and sidewalls (not shown) forming side surfaces. According to the mold 50, the pneumatic tire 10 capable of improving maneuver stability performance on a wet road surface and maneuver stability performance on a dry road surface can be molded.

Hereinafter, each member will be described with respect to the tire axial direction X, the tire circumferential direction Y, and the tire radial direction Z of the above-described pneumatic tire 10 molded by using the mold 50.

The mold 50 includes a tread mold 51 for molding a surface of the tread 20 of the pneumatic tire 10, and a pair of side molds 52 for molding surfaces of the sidewalls.

The tread mold 51 includes a main body 54 having a tread molding surface 53, protrusions 55 protruding from the tread molding surface 53, and sipe blades 60 protruding from the tread molding surface 53 and provided between the protrusions 55.

The main body 54 is made of a metal material, for example, an aluminum alloy. As the aluminum alloy, for example, an AC4-based alloy or an AC7-based alloy is preferably used. The protrusions 55 are portions for molding the main grooves 21 in the pneumatic tire 10. The protrusions 55 are made of a metal material that is same as that forming the main body 54.

### <Sipe Blade>

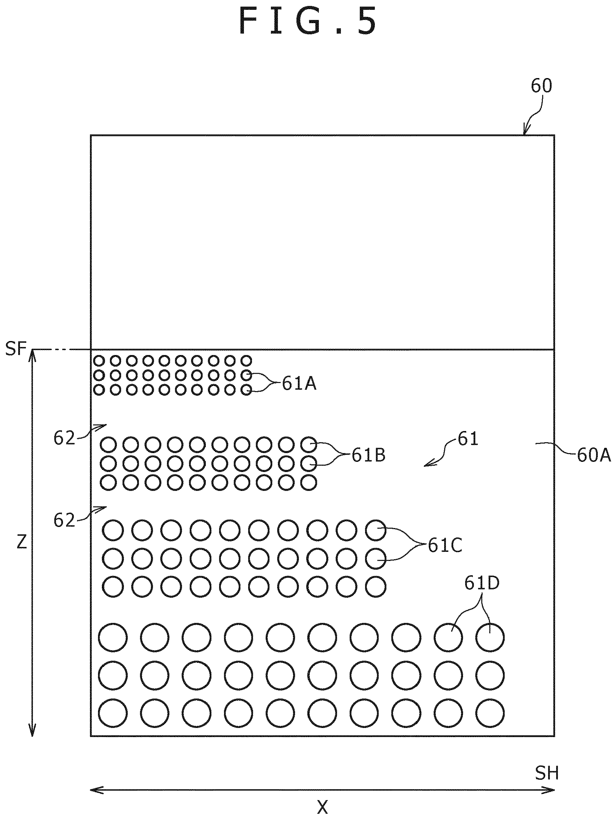

The sipe blades 60 according to the example of the embodiment will be described with reference to FIG. 5.

The sipe blades 60 mold the sipe 40 of the pneumatic tire 10. Each sipe blade 60 protrudes from the tread molding surface 53 between the protrusions 55 in the tire radial direction Z. The sipe blade 60 has a flat plate shape and may be made of a metal material, for example, stainless steel. Preferable examples of the stainless steel include SUS303, SUS304, SUS630, and SUS631. When a three-dimensional molding machine is used, SUS304L, 17-4PH corresponding to SUS630, or the like, is preferably used.

In a general processing method for the sipe blade 60, a shape thereof is formed using a press molding machine. In the processing method when there is a change in shape in a thickness direction of the sipe blade 60 according to the present invention, the shape thereof is formed by cutting using machining. By using the three-dimensional molding machine, a complicated shape that is difficult to attain by machining can be formed.

### <Protrusion>

A plurality of protrusions 61 are formed on one side surface 60A of the sipe blade 60. Each protrusion 61 is a portion for forming the recess 41 of the sipe 40 in the pneumatic tire 10 described above. The protrusion 61 according to the present invention is formed in a hemispherical or a semi-ellipsoid shape. It is preferable that the protrusion 61 according to the present embodiment is formed in a portion from a block surface side to 50 or more when a length (sipe depth) of the sipe 40 in the tire radial direction Z is set to 100. It is preferable that the protrusion 61 according to the present embodiment is formed at a length of 50 or more when a length of the sipe 40 in the tire axial direction X is set to 100.

The protrusions 61 according to the present invention include protrusions 61A, 61B, 61C, and 61D having different volumes of protruding portions (hereinafter referred to as a protrusion volume). The protrusions 61 are formed by respectively gathering and aligning protrusions having the same volume. In the sipe blade 60, regions in which the protrusions 61 are formed are arranged from the block surface side to a bottom side in the tire radial direction Z in an order of a region in which the protrusions 61A are formed, a region in which the protrusions 61B are formed, a region in which the protrusions 61C are formed, and a region in which the protrusions 61D are formed.

The protrusions 61A, 61B, 61C, and 61D increase in protrusion volume in an order of the protrusions 61A, 61B, 61C, and 61D. In other words, the protrusion volumes of the protrusions 61 increase from the block surface side to the bottom side in the tire radial direction Z. The numbers of the protrusions 61A, 61B, 61C, and 61D according to the present embodiment are the same.

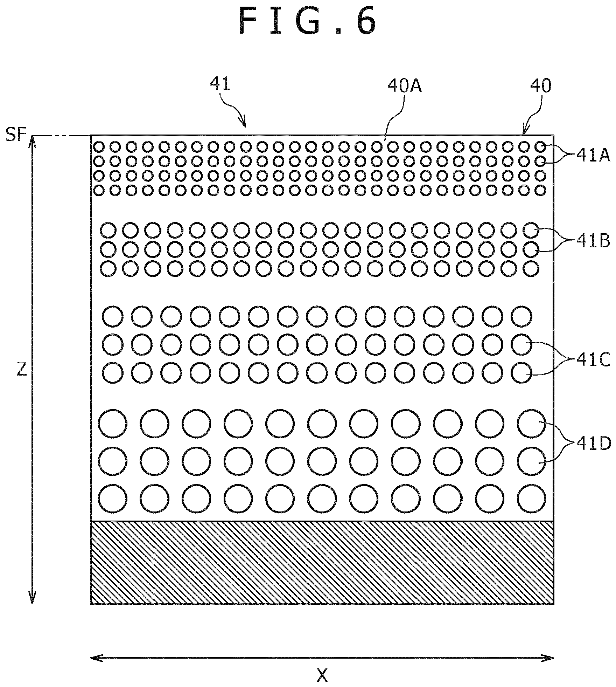

The recess 41 according to other examples of embodiments will be described with reference to FIGS. 6 to 16.

In the following second to twelfth embodiments, an arrangement pattern of the recesses 41A, 41B, 41C, and 41D according to the first embodiment is changed. In the following embodiments, since the recess 41 is the same as that according to the first embodiment described above except for the arrangement pattern of the recesses 41A, 41B, 41C, and 41D, a description thereof will be omitted.

### <Second Embodiment>

As shown in FIG. 6, the recesses 41 according to the second embodiment include the recesses 41A, 41B, 41C, and 41D having different recess volumes. The recesses 41 are formed by respectively gathering and aligning recesses having the same volume. In the block 30, regions in which the recesses 41 are formed are arranged from a block surface side to a bottom side in the tire radial direction Z in an order of a region in which the recesses 41A are formed, a region in which the recesses 41B are formed, a region in which the recesses 41C are formed, and a region in which the recesses 41D are formed.

The recesses 41A, 41B, 41C, and 41D increase in recess volume in an order of the recesses 41A, 41B, 41C, and 41D. In other words, the recess volumes of the recesses 41 increase from the block surface side to the bottom side in the tire radial direction Z. The numbers of the recesses 41A, 41B, 41C, and 41D according to the present embodiment decrease in the order of the recesses 41A, 41B, 41C, and 41D. In other words, areas of the regions in which the recesses 41A, 41B, 41C, and 41D are respectively formed are the same.

With the above configuration, since, among the plurality of recesses 41, the recess volume of the recess 41 on the bottom side is larger than the recess volume of the recess 41 on the block surface side in the tire radial direction Z, in-plane rigidity can be reduced, a ground contact area can be increased, and maneuver stability performance on a wet road surface can be improved. In addition, since, among the plurality of recesses 41, the recess volume of the recess 41 on the block surface side is smaller than the recess volume of the recess 41 on the bottom side in the tire radial direction Z, surface rigidity can be increased, and a decrease in maneuver stability performance on a dry road surface can be prevented.

### <Third Embodiment>

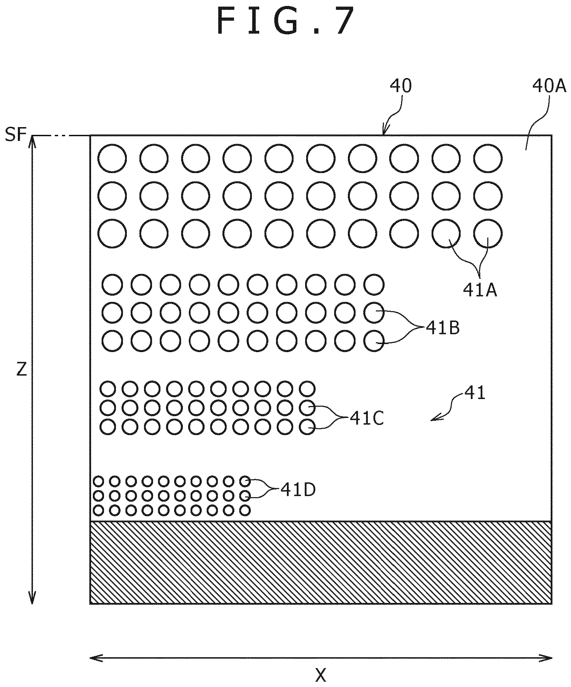

As shown in FIG. 7, the recesses 41 according to the third embodiment include the recesses 41A, 41B, 41C, and 41D having different recess volumes. The recesses 41 are formed by respectively gathering and aligning recesses having the same volume. In the block 30, regions in which the recesses 41 are formed are arranged from a block surface side to a bottom side in the tire radial direction Z in an order of a region in which the recesses 41A are formed, a region in which the recesses 41B are formed, a region in which the recesses 41C are formed, and a region in which the recesses 41D are formed. The recesses 41A, 41B, 41C, 41D are formed to align on one side in the tire axial direction X.

The recesses 41A, 41B, 41C, and 41D decrease in recess volume in an order of the recesses 41A, 41B, 41C, and 41D. In other words, the recess volumes of the recesses 41 decrease from the block surface side to the bottom side in the tire radial direction Z. The numbers of the recesses 41A, 41B, 41C, and 41D according to the present embodiment are the same.

With the above configuration, since the recess volume of the recess 41 on the block surface side is larger than the recess volume of the recess 41 on the bottom side in the tire radial direction Z, water absorption performance can be improved and maneuver stability performance on a wet road surface can be improved. In addition, since the recess volume of the recess 41 on the bottom side is smaller than the recess volume of the recess 41 on the block surface side in the tire radial direction Z, it is possible to prevent a decrease in in-plane rigidity and prevent a decrease in maneuver stability performance on a dry road surface.

### <Fourth Embodiment>

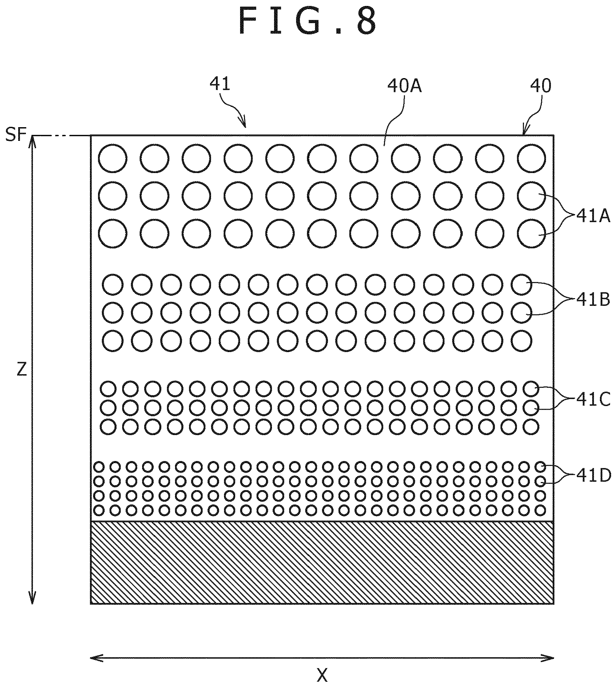

As shown in FIG. 8, the recesses 41 according to the fourth embodiment include the recesses 41A, 41B, 41C, and 41D having different recess volumes. The recesses 41 are formed by respectively gathering and aligning recesses having the same volume. In the block 30, regions in which the recesses 41 are formed are arranged from a block surface side to a bottom side in the tire radial direction Z in an order of a region in which the recesses 41A are formed, a region in which the recesses 41B are formed, a region in which the recesses 41C are formed, and a region in which the recesses 41D are formed.

The recesses 41A, 41B, 41C, and 41D decrease in recess volume in an order of the recesses 41A, 41B, 41C, and 41D. In other words, the recess volumes of the recesses 41 decrease from the block surface side to the bottom side in the tire radial direction Z. The numbers of the recesses 41A, 41B, 41C, and 41D according to the present embodiment increase in the order of the recesses 41A, 41B, 41C, and 41D. In other words, areas of the regions in which the recesses 41A, 41B, 41C, and 41D are respectively formed are the same.

With the above configuration, since the recess volume of the recess 41 on the block surface side is larger than the recess volume of the recess 41 on the bottom side in the tire radial direction Z, water absorption performance can be improved and maneuver stability performance on a wet road surface can be improved. In addition, since the recess volume of the recess 41 on the bottom side is smaller than the recess volume of the recess 41 on the block surface side in the tire radial direction Z, it is possible to prevent a decrease in in-plane rigidity and prevent a decrease in maneuver stability performance on a dry road surface.

### <Fifth Embodiment>

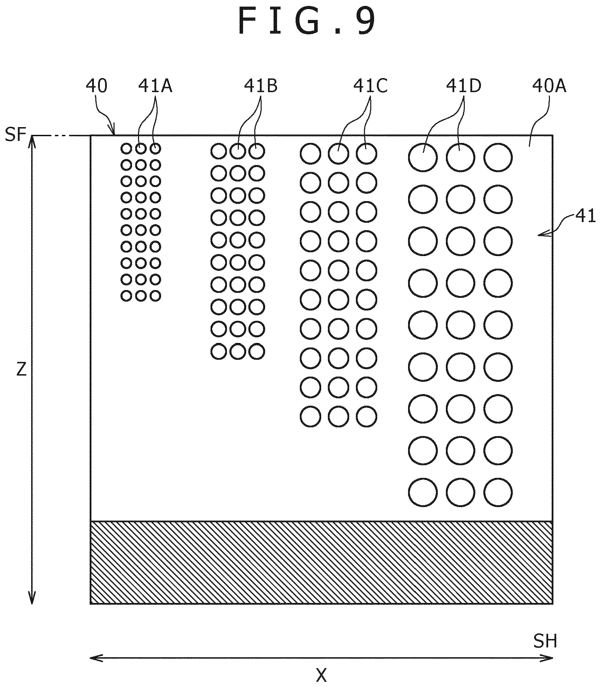

As shown in FIG. 9, the recesses 41 according to the fifth embodiment include the recesses 41A, 41B, 41C, and 41D having different recess volumes. The recesses 41 are formed by respectively gathering and aligning recesses having the same volume. In the block 30, regions in which the recesses 41 are formed are arranged from an equator side to a shoulder side in the tire axial direction X in an order of a region in which the recesses 41A are formed, a region in which the recesses 41B are formed, a region in which the recesses 41C are formed, and a region in which the recesses 41D are formed. The recesses 41A, 41B, 41C, and 41D are formed to align on a block surface side in the tire radial direction Z.

The recesses 41A, 41B, 41C, and 41D increase in recess volume in an order of the recesses 41A, 41B, 41C, and 41D. In other words, the recess volumes of the recesses 41 increase from the equator side to the shoulder side in the tire axial direction X. The numbers of the recesses 41A, 41B, 41C, and 41D according to the present embodiment are the same.

With the above configuration, since the number of recesses 41 on the block surface side is larger than that of recesses 41 on a bottom side in the tire radial direction Z, water absorption performance can be improved, and maneuver stability performance on a wet road surface can be improved. In addition, since the number of the recesses 41 on the bottom side is smaller than that of the recesses 41 on the block surface side in the tire radial direction Z, it is possible to prevent a decrease in in-plane rigidity and prevent a decrease in maneuver stability performance on a dry road surface.

### <Sixth Embodiment>

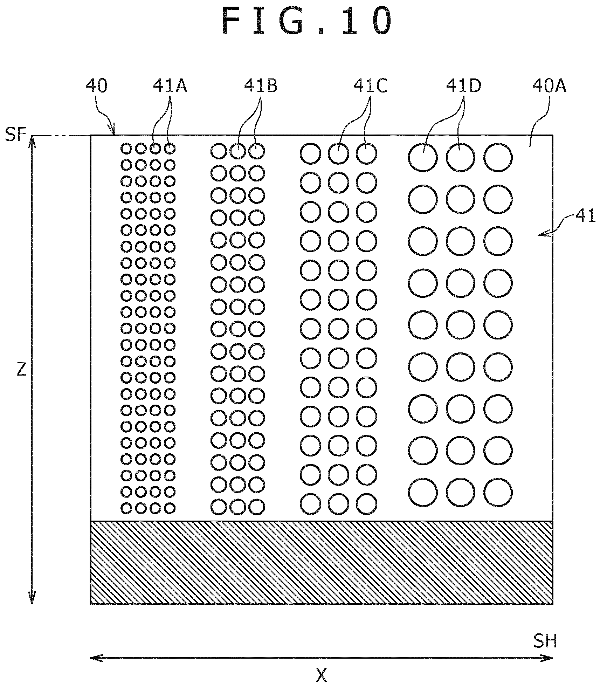

As shown in FIG. 10, the recesses 41 according to the sixth embodiment include the recesses 41A, 41B, 41C, and 41D having different recess volumes. The recesses 41 are formed by respectively gathering and aligning recesses having the same volume. In the block 30, regions in which the recesses 41 are formed are arranged from an equator side to a shoulder side in the tire axial direction X in an order of a region in which the recesses 41A are formed, a region in which the recesses 41B are formed, a region in which the recesses 41C are formed, and a region in which the recesses 41D are formed.

The recesses 41A, 41B, 41C, and 41D increase in recess volume in an order of the recesses 41A, 41B, 41C, and 41D. In other words, the recess volumes of the recesses 41 increase from the equator side to the shoulder side in the tire axial direction X. The numbers of the recesses 41A, 41B, 41C, and 41D according to the present embodiment decrease in the order of the recesses 41A, 41B, 41C, and 41D. In other words, areas of the regions in which the recesses 41A, 41B, 41C, and 41D are respectively formed are the same.

With the above configuration, water on the block surface SF of the tread 20 can be absorbed, and a water absorption effect of the sipe 40 can be improved.

### <Seventh Embodiment>

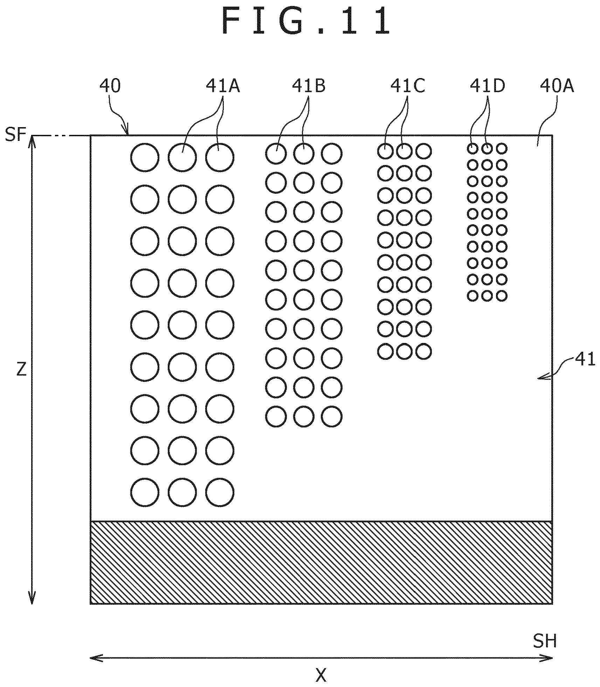

As shown in FIG. 11, the recesses 41 according to the seventh embodiment include the recesses 41A, 41B, 41C, and 41D having different recess volumes. The recesses 41 are formed by respectively gathering and aligning recesses having the same volume. In the block 30, regions in which the recesses 41 are formed are arranged from an equator side to a shoulder side in the tire axial direction X in an order of a region in which the recesses 41A are formed, a region in which the recesses 41B are formed, a region in which the recesses 41C are formed, and a region in which the recesses 41D are formed. The recesses 41A, 41B, 41C, and 41D are formed to align on a block surface side in the tire radial direction Z.

The recesses 41A, 41B, 41C, and 41D decrease in recess volume in an order of the recesses 41A, 41B, 41C, and 41D. In other words, the recess volumes of the recesses 41 decrease from the equator side to the shoulder side in the tire axial direction X. The numbers of the recesses 41A, 41B, 41C, and 41D according to the present embodiment are the same.

With the above configuration, since the number of recesses 41 on the block surface side is larger than that of recesses 41 on a bottom side in the tire radial direction Z, water absorption performance can be improved, and maneuver stability performance on a wet road surface can be improved. In addition, since the number of the recesses 41 on the bottom side is smaller than that of the recesses 41 on the block surface side in the tire radial direction Z, it is possible to prevent a decrease in in-plane rigidity and prevent a decrease in maneuver stability performance on a dry road surface.

### <Eighth Embodiment>

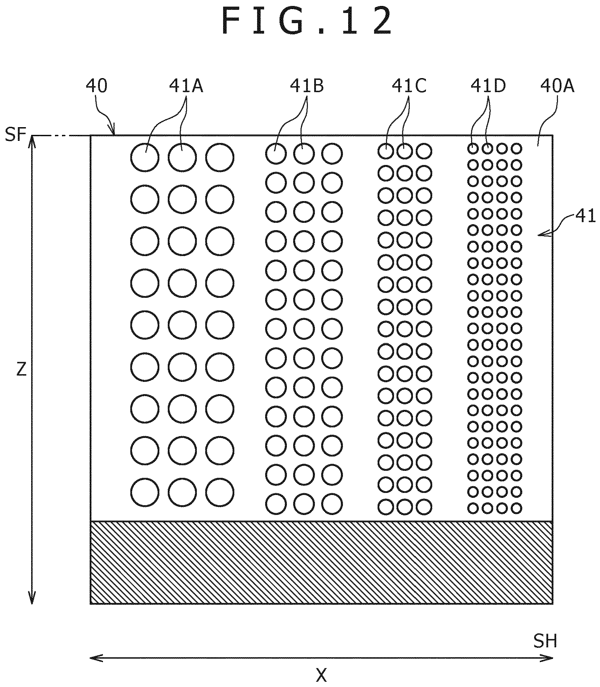

As shown in FIG. 12, the recesses 41 according to the eighth embodiment include the recesses 41A, 41B, 41C, and 41D having different recess volumes. The recesses 41 are formed by respectively gathering and aligning recesses having the same volume. In the block 30, regions in which the recesses 41 are formed are arranged from an equator side to a shoulder side in the tire axial direction X in an order of a region in which the recesses 41A are formed, a region in which the recesses 41B are formed, a region in which the recesses 41C are formed, and a region in which the recesses 41D are formed.

The recesses 41A, 41B, 41C, and 41D decrease in recess volume in an order of the recesses 41A, 41B, 41C, and 41D. In other words, the recess volumes of the recesses 41 decrease from the equator side to the shoulder side in the tire axial direction X. The numbers of the recesses 41A, 41B, 41C, and 41D according to the present embodiment increase in the order of the recesses 41A, 41B, 41C, and 41D. In other words, areas of the regions in which the recesses 41A, 41B, 41C, and 41D are respectively formed are the same.

With the above configuration, since the recess volume of the recess 41 on the shoulder side is smaller than the recess volume of the recess 41 on the equator side in the tire axial direction X, maneuver stability performance on a dry road surface can be improved.

### <Ninth Embodiment>

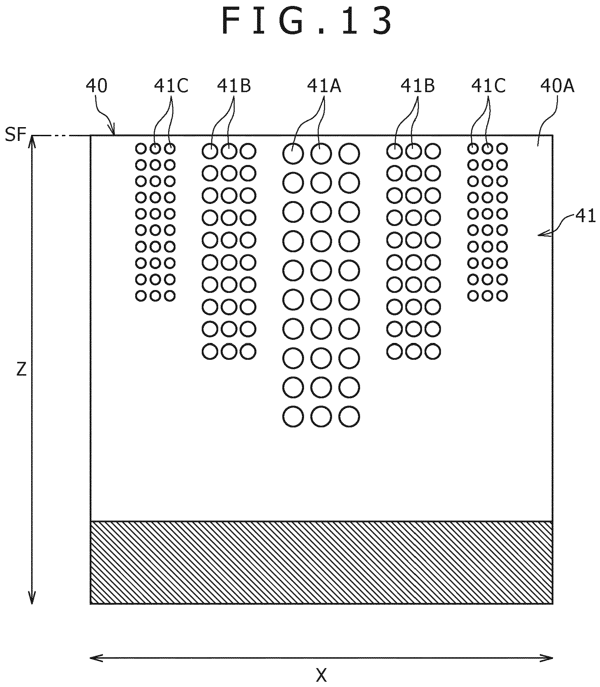

As shown in FIG. 13, the recesses 41 according to the ninth embodiment include the recesses 41A, 41B, and 41C having different recess volumes. The recesses 41 are formed by respectively gathering and aligning recesses having the same volume. In the block 30, regions in which the recesses 41 are formed are arranged from a block central portion to two block end portions in the tire axial direction X in an order of a region in which the recesses 41A are formed, a region in which the recesses 41B are formed, and a region in which the recesses 41C are formed. The recesses 41A, 41B, and 41C are formed to align on a block surface side in the tire radial direction Z.

The recesses 41A, 41B, and 41C decrease in recess volume in an order of the recesses 41A, 41B, and 41C. In other words, the recess volumes of the recesses 41 decrease from the block central portion to two block end sides in the tire axial direction X. The numbers of the recesses 41A, 41B, and 41C according to the present embodiment are the same.

With the above configuration, since the number of recesses 41 on the block surface side is larger than that of recesses 41 on a bottom side in the tire radial direction Z, water absorption performance can be improved, and maneuver stability performance on a wet road surface can be improved. In addition, since the number of the recesses 41 on the bottom side is smaller than that of the recesses 41 on the block surface side in the tire radial direction Z, it is possible to prevent a decrease in in-plane rigidity and prevent a decrease in maneuver stability performance on a dry road surface.

### <Tenth Embodiment>

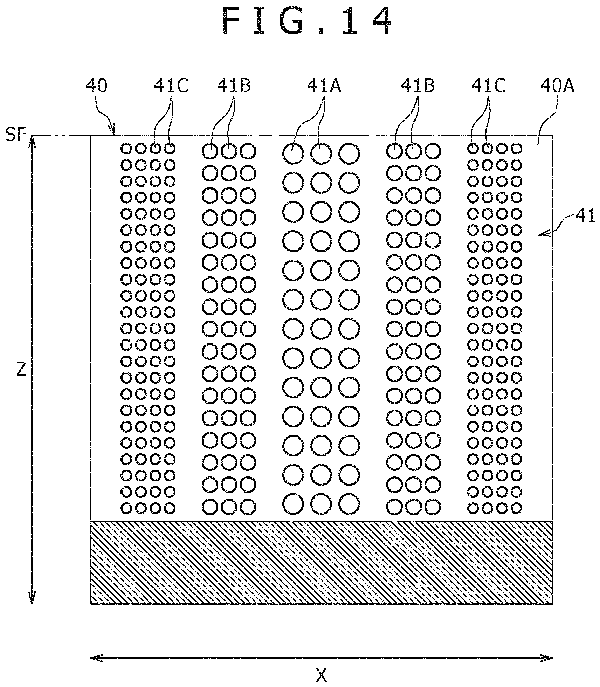

As shown in FIG. 14, the recesses 41 according to the tenth embodiment include the recesses 41A, 41B, and 41C having different recess volumes. The recesses 41 are formed by respectively gathering and aligning recesses having the same volume. In the block 30, regions in which the recesses 41 are formed are arranged from a block central portion to two block end portions in the tire axial direction X in an order of a region in which the recesses 41A are formed, a region in which the recesses 41B are formed, and a region in which the recesses 41C are formed.

The recesses 41A, 41B, and 41C decrease in recess volume in an order of the recesses 41A, 41B, and 41C. In other words, the recess volumes of the recesses 41 decrease from the block central portion to two block end sides in the tire axial direction X. The number of the recesses 41A, 41B, and 41C according to the present embodiment increases in the order of the recesses 41A, 41B, and 41C. In other words, areas of the regions in which the recesses 41A, 41B, and 41C are respectively formed are the same.

With the above configuration, since the recess volume of the recess 41 on the two block end sides is smaller than the recess volume of the recess 41 in the central portion in the tire axial direction X, maneuver stability performance on a dry road surface can be improved.

### <Eleventh Embodiment>

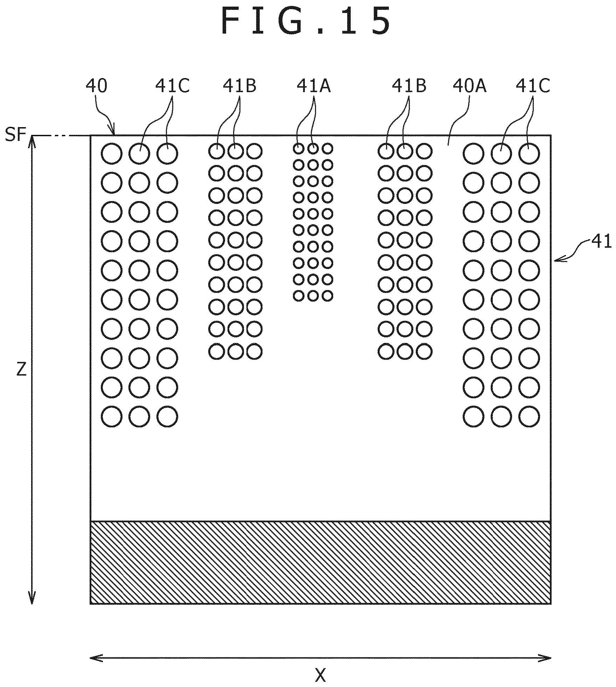

As shown in FIG. 15, the recesses 41 according to the eleventh embodiment include the recesses 41A, 41B, and 41C having different recess volumes. The recesses 41 are formed by respectively gathering and aligning recesses having the same volume. In the block 30, regions in which the recesses 41 are formed are arranged from a block central portion to two block end portions in the tire axial direction X in an order of a region in which the recesses 41A are formed, a region in which the recesses 41B are formed, and a region in which the recesses 41C are formed. The recesses 41A, 41B, and 41C are formed to align on a block surface side in the tire radial direction Z.

The recesses 41A, 41B, and 41C increase in recess volume in an order of the recesses 41A, 41B, and 41C. In other words, the recess volumes of the recesses 41 increase from the block central portion to two block end sides in the tire axial direction X. The number of the recesses 41A, 41B, and 41C according to the present embodiment are the same.

With the above configuration, since the number of recesses 41 on the block surface side is larger than that of recesses 41 on a bottom side in the tire radial direction Z, water absorption performance can be improved, and maneuver stability performance on a wet road surface can be improved. In addition, since the number of the recesses 41 on the bottom side is smaller than that of the recesses 41 on the block surface side in the tire radial direction Z, it is possible to prevent a decrease in in-plane rigidity and prevent a decrease in maneuver stability performance on a dry road surface.

### <Twelfth Embodiment>

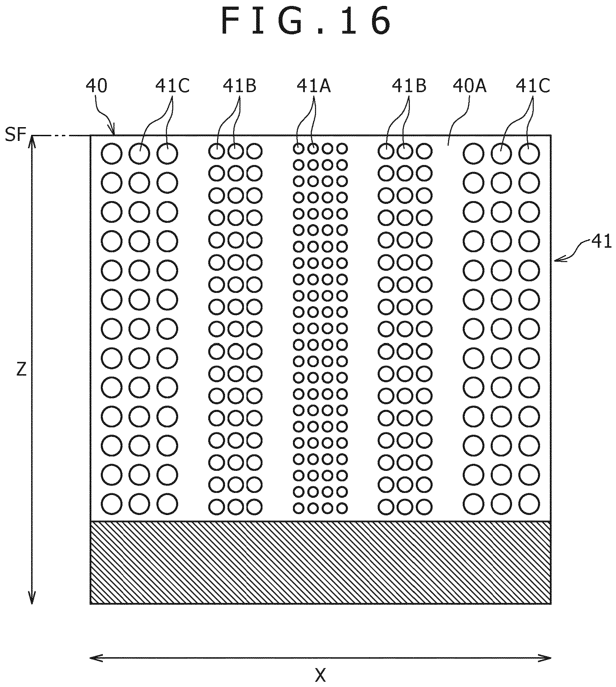

As shown in FIG. 16, the recesses 41 according to the twelfth embodiment include the recesses 41A, 41B, and 41C having different recess volumes. The recesses 41 are formed by respectively gathering and aligning recesses having the same volume. In the block 30, regions in which the recesses 41 are formed are arranged from a block central portion to two block end portions in the tire axial direction X in an order of a region in which the recesses 41A are formed, a region in which the recesses 41B are formed, and a region in which the recesses 41C are formed.

The recesses 41A, 41B, and 41C increase in recess volume in an order of the recesses 41A, 41B, and 41C. In other words, the recess volumes of the recesses 41 increase from the block central portion to two block end sides in the tire axial direction X. The numbers of the recesses 41A, 41B, and 41C according to the present embodiment decrease in the order of the recesses 41A, 41B, and 41C. In other words, areas of the regions in which the recesses 41A, 41B, and 41C are respectively formed are the same.

According to the above configuration, since the recess volume of the recess 41 on the two block end sides is larger than the recess volume of the recess 41 in the central portion in the tire axial direction X, maneuver stability performance on a wet road surface can be improved.

However, the present invention is not limited to the above-described embodiments and modifications thereof, and various modifications and improvements can be made within the scope of matters described in the claims of the present application.

## Claims

1. A pneumatic tire (10) comprising:
a tread (20) including a block (30) in which at least one sipe (40) is formed, wherein
a plurality of recesses (41) are formed in one wall surface (40A, 40B) of each of the at least one sipe (40), and
the recesses (41) change in volume toward at least one of a tire radial direction (Z) and a tire axial direction (X) in the block (30),
**characterized in that** the recesses (41) are formed in a hemispherical shape or a semi-ellipsoid shape,
the recesses (41) are formed by gathering and aligning recesses having the same volume, and
a surface facing the recesses (41) is a flat surface.

2. The pneumatic tire (10) according to claim 1, wherein
the recesses (41) increase in volume toward a bottom side in the tire radial direction (Z) in the block (30).

3. The pneumatic tire (10) according to claim 1, wherein
the recesses (41) decrease in volume toward a bottom side in the tire radial direction (Z) in the block (30).

4. The pneumatic tire (10) according to claim 1, wherein
the recesses (41) increase in volume toward a shoulder side (SH) in the tire axial direction (X) in the block (30).

5. The pneumatic tire (10) according to claim 1, wherein
the recesses (41) decrease in volume toward a shoulder side (SH) in the tire axial direction (X) in the block (30).

6. A mold for molding a tire comprising:
a sipe blade (60) that forms a sipe (40) in a block (30) of a tread (20) of a pneumatic tire (10), wherein
a plurality of protrusions (61) are formed on at least one side surface (60A, 60B) of the sipe blade (60), and
the protrusions (61) change in volume toward at least one of a tire radial direction (Z) and a tire axial direction (X) in the block (30),
**characterized in that** the protrusions (61) are formed in a hemispherical shape or a semi-ellipsoid shape,
the protrusions (61) are formed by gathering and aligning protrusions having the same volume, and
at least one side surface of the sipe blade (60) is a flat surface.

## Patentansprüche

1. Luftreifen (10), umfassend:
eine Lauffläche (20) mit einem Block (30), in dem mindestens eine Lamelle (40) ausgebildet ist, wobei
eine Vielzahl von Ausnehmungen (41) in einer Wandfläche (40A, 40B) jeder der mindestens einen Lamelle (40) ausgebildet sind, und
das Volumen der Ausnehmungen (41) sich in einer radialen Richtung (Z) des Reifens und/oder einer axialen Richtung (X) des Reifens in dem Block (30) ändert,
**dadurch gekennzeichnet, dass**
die Ausnehmungen (41) in einer Halbkugelform oder einer Halbellipsoidform ausgebildet sind,
die Ausnehmungen (41) durch Zusammenfassen und Ausrichten von Ausnehmungen mit dem gleichen Volumen ausgebildet sind und
eine den Ausnehmungen (41) zugewandte Fläche eine ebene Fläche ist.

2. Luftreifen (10) nach Anspruch 1, wobei
das Volumen der Ausnehmungen (41) in Richtung zu einer Unterseite in der radialen Richtung (Z) des Reifens im Block (30) zunimmt.

3. Luftreifen (10) nach Anspruch 1, wobei
das Volumen der Ausnehmungen (41) in Richtung zu einer Bodenseite in der radialen Richtung (Z) des Reifens im Block (30) abnimmt.

4. Luftreifen (10) nach Anspruch 1, wobei
das Volumen der Ausnehmungen (41) in Richtung zu einer Schulterseite (SH) in der axialen Richtung (X) des Reifens im Block (30) zunimmt.

5. Luftreifen (10) nach Anspruch 1, wobei
das Volumen der Ausnehmungen (41) in Richtung zu einer Schulterseite (SH) in der axialen Richtung (X) des Reifens im Block (30) abnimmt.

6. Form zum Formen eines Reifens, aufweisend:
ein Lamellenmesser (60), das eine Lamelle (40) in einem Block (30) einer Lauffläche (20) eines Luftreifens (10) erzeugt, wobei
eine Vielzahl von Vorsprüngen (61) auf mindestens einer Seitenfläche (60A, 60B) des Lamellenmessers (60) ausgebildet sind, und
das Volumen der Vorsprünge (61) sich in einer radialen Richtung (Z) und/oder einer axialen Richtung (X) des Reifens im Block (30) ändert,
**dadurch gekennzeichnet, dass**
die Vorsprünge (61) in einer Halbkugelform oder einer Halbellipsoidform ausgebildet sind,
die Vorsprünge (61) durch Zusammenfassen und Ausrichten von Vorsprüngen mit dem gleichen Volumen ausgebildet sind, und
mindestens eine Seitenfläche des Lamellenblatts (60) eine flache Oberfläche ist.

## Revendications

1. Pneumatique (10) comprenant :
une bande de roulement (20) incluant un bloc (30) dans lequel au moins une lamelle (40) est formée,
une pluralité de renfoncements (41) étant formés dans une surface de paroi (40A, 40B) de chacune desdites au moins une lamelle (40), et
les renfoncements (41) changeant de volume dans au moins l'une d'une direction radiale du pneu (Z) et une direction axiale du pneu (X) dans le bloc (30),
**caractérisé en ce que** les renfoncements (41) ont une forme hémisphérique ou semi-ellipsoïdale,
les renfoncements (41) sont formés en rassemblant et en alignant des renfoncements ayant le même volume, et
une surface faisant face aux renfoncements (41) est une surface plane.

2. Pneumatique (10) selon la revendication 1, dans lequel
les renfoncements (41) augmentent en volume vers un côté inférieur dans la direction radiale du pneu (Z) dans le bloc (30).

3. Pneumatique (10) selon la revendication 1, dans lequel
les renfoncements (41) diminuent en volume vers un côté inférieur dans la direction radiale du pneu (Z) dans le bloc (30).

4. Pneumatique (10) selon la revendication 1, dans lequel
les renfoncements (41) augmentent en volume vers un côté d'épaulement (SH) dans la direction axiale du pneu (X) dans le bloc (30).

5. Pneumatique (10) selon la revendication 1, dans lequel
les renfoncements (41) diminuent en volume vers un côté d'épaulement (SH) dans la direction axiale du pneu (X) dans le bloc (30).

6. Moule pour mouler un pneumatique comprenant :
une lame de lamelle (60) qui forme une lamelle (40) dans un bloc (30) d'une bande de roulement (20) d'un pneumatique (10), dans lequel
une pluralité de protubérencees (61) sont formées sur au moins une surface latérale (60A, 60B) de la lame de lamelle (60), et
les protubérences (61) varient en volume dans au moins l'une d'une direction radiale du pneu (Z) et une direction axiale du pneu (X) dans le bloc (30),
**caractérisé en ce que** les protubérence (61) ont une forme hémisphérique ou semi-ellipsoïdale,
les protubérence (61) sont formées en rassemblant et en alignant des protubérence ayant le même volume, et
au moins une surface latérale de la lame de lamelle (60) est une surface plane.
